# EUROPEAN PATENT SPECIFICATION

(11) **EP 4 556 779 B1**
(45) Date of publication and mention of the grant of the patent: **08.07.2026**
(21) Application number: 23867170.5
(22) Date of filing: 11.08.2023
(51) Int. Cl.: F16M 11/04, F16C 11/04, H04M 1/02, G06F 1/16

(54) **SYNCHRONIZATION MECHANISM AND ELECTRONIC DEVICE**
SYNCHRONISATIONSMECHANISMUS UND ELEKTRONISCHE VORRICHTUNG
MÉCANISME DE SYNCHRONISATION ET DISPOSITIF ÉLECTRONIQUE

(30) Priority: 19.09.2022 CN 202211137536
(43) Date of publication of application: 21.05.2025
(73) Proprietor: Honor Device Co., Ltd., Shenzhen, Guangdong 518040 (CN)
(72) Inventor: HUANG, Shengxian, Shenzhen, Guangdong 518040 (CN); DONG, Shaohong, Shenzhen, Guangdong 518040 (CN)
(74) Representative: Goddar, Heinz J.
(86) International application number: PCT/CN2023/112699
(87) International publication number: WO 2024/060876

(56) References cited:
- WO-A1-2021/184654
- WO-A1-2022/089500
- CN-A- 113 067 924
- CN-A- 113 067 924
- CN-A- 114 697 418
- CN-A- 116 044 888
- CN-A- 116 357 660
- US-A1- 2024 007 554

## Description

### TECHNICAL FIELD

This application relates to the field of electronic device technologies, and in particular, to a synchronization mechanism and an electronic device.

### BACKGROUND

With the development of flexible screen technologies, a flexible screen is increasingly and widely used in an electronic device, especially in a foldable electronic device. The foldable electronic device includes the flexible screen and a mechanism that drives the flexible screen to rotate relatively, so as to fold or unfold the flexible screen.

To synchronously rotate the flexible screen during folding or unfolding, a synchronization mechanism is used in the mechanism that drives the flexible screen to rotate relatively. In the related technologies, the synchronization mechanism includes two synchronization gears and two gear swing arms. The two synchronization gear swing arms are respectively located at two sides of the two synchronization gears. The swing arms are connected to the flexible screen. The two synchronization gears drive the gear swing arms to synchronously rotate, so that the swing arms drive the flexible screen to synchronously rotate.

However, currently, a size of the electronic device is required to be smaller, so that a size of the synchronization mechanism is also required to be smaller, resulting in extremely difficult processing of a small-sized synchronization gear and high processing costs.
CN 113 067 924 A discloses a folding mechanism, a support structure and an electronic device are provided. The folding mechanism includes a first screen supporting plate, a second screen supporting plate, a first housing seat provided on the first screen supporting plate, a second housing seat provided on the second screen supporting plate, a base and a synchronization assembly. Both the first housing seat and the second housing seat are rotatably connected to the base. In the synchronization assembly, along a rotation direction, a first synchronization swing arm is in limiting fit with a first connecting shaft, and a second synchronization swing arm is in limiting fit with a second connecting shaft.
CN 116 044 888 A and CN 116 357 660 A disclose a synchronizing mechanism, a rotating shaft mechanism and electronic device. The synchronizing mechanism can be applied to electronic devices such as mobile phones, tablet personal computers, tablet personal computer accessories and wearable devices. The synchronizing mechanism comprises a base, a sliding block, an elastic component, a first swing arm and a second swing arm, and the first swing arm and the second swing arm are located on the two sides of the sliding block. Under the action of the elastic component, a spiral face elastically abuts against the abutting portion so that the rotating angles of the first swing arm and the second swing arm relative to the base can be consistent. The spiral surface is arranged on the end face of the protruding part of the sliding block or the swing arm. CN 114 697 418 A discloses in the technical field of flexible display screen supporting, an actuating mechanism and electronic equipment. The actuating mechanism comprises a sliding piece which comprises a sliding part and a first limiting part; the driving part comprises a sliding groove part and a rotating arm, the rotating arm rotates around a first rotating shaft so as to be switched between a first state and a second state, and the sliding part is in sliding fit with the sliding groove part; the movable part comprises a second limiting part, and the second limiting part is arranged towards the first limiting part; and an elastic piece is arranged between the fixed piece and the movable piece. When the rotating arm is in the first state, the movable piece is subjected to the acting force of the elastic piece, so that the second limiting part and the second limiting part are matched for limiting and abut against the sliding piece; and when the rotating arm is in the second state, the first limiting part and the second limiting part are separated from limiting fit.
WO 2021/184654 A1 discloses a rotating shaft mechanism, comprising a main support and at least one rotating assembly; each rotating assembly can rotate relative to the main support so as to switch between an unfolded state and a folded state; in a matching structure of the main support and any rotating assembly, the main support has a first center of rotation and a second center of rotation; the rotating assemblies each comprises a rotating part, a middle frame and a sliding part, and the middle frame has a third center of rotation; the rotating part can be connected to the main support so as to rotate about the first center of rotation, and the other end of the rotating part can be connected to the middle frame so as to rotate about the third center of rotation; one end of the sliding part is hinged to the main support, and the sliding part can rotate relative to the main support about the second center of rotation; and the other end of the sliding part slidingly matches the middle frame so that the middle frame is away from or close to the second center of rotation along the extending direction of the sliding part.
WO 2022/089500 A1 discloses a folding mechanism and an electronic device. The folding mechanism is applied to a housing apparatus of an electronic device and is used for connecting two housings of the housing apparatus. The folding mechanism can perform automatic avoidance during a folding process to form a screen accommodating space; and a flexible display screen is accommodated in the screen accommodating space, so that the housing apparatus implements a stable folding action and a small press force on the flexible display screen.

### SUMMARY

The invention provides a synchronization mechanism of claim 1 and intends to tend to miniaturize a design, so as to reduce processing difficulty and reduce processing costs. Further embodiments are disclosed in the dependent claims.

According to a first aspect, this application provides a synchronization mechanism of claim 1, and the synchronization mechanism includes a first rotation axis, a second rotation axis, a first swing member, a second swing member, and a sliding assembly.

The first swing member is rotatably connected to the first rotation axis, the second swing member is rotatably connected to the second rotation axis, and the first rotation axis is arranged in parallel with the second rotation axis.

The sliding assembly connects the first swing member and the second swing member, the first swing member rotates around the first rotation axis to drive the sliding assembly to move along an axial direction of the first rotation axis and the second rotation axis, and the sliding assembly drives the second swing member to rotate around the second rotation axis, to enable a rotation direction of the second swing member to be opposite to a rotation direction of the first swing member.

The synchronization mechanism provided in this application includes the first rotation axis, the second rotation axis, the first swing member, the second swing member, and the sliding assembly. The first swing member may rotate around the first rotation axis, and the second swing member may rotate around the second rotation axis. The first swing member, the second swing member, and the sliding assembly are configured as follows: when the first swing member rotates, the sliding assembly is driven to move along the axial direction of the first rotation axis and the second rotation axis, and during movement of the sliding assembly, the second swing member is driven to rotate around the second rotation axis, so that the first swing member and the second swing member synchronously and reversely rotate. Alternatively, when the second swing member rotates around the second rotation axis, the sliding assembly is driven to rotate along the second rotation axis and the first rotation axis, and during movement of the sliding assembly, the first swing member is driven to rotate around the first rotation axis, so that the first swing member and the second swing member synchronously and reversely rotate. Movement of the sliding assembly may drive the second swing member and the first swing member to synchronously and reversely swing. The sliding assembly may be reduced in size along a radial direction of a rotation axis, so that the sliding assembly can be miniaturized (lightened and thinned) without processing of teeth of the gears. Therefore, the sliding assembly is easy to process, and costs are low.

The first swing member includes two first curved surfaces arranged along the rotation direction, the second swing member includes two second curved surfaces arranged along the rotation direction, and the first curved surface and the second curved surface are arranged in a mirroring manner.

The sliding assembly includes a first abutting portion and a second abutting portion, the first abutting portion is configured to abut against the first curved surface, and the second abutting portion is configured to abut against the second curved surface, to enable the first abutting portion to move, when the first swing member rotates, along the axial direction of the first rotation axis under an action of the first curved surface, and the second abutting portion acts on the second curved surface, to drive the second swing member to rotate around the second rotation axis.

In another possible implementation, the first swing member includes a first rotation portion and a first swing arm, the first rotation portion is rotatably connected to the first rotation axis, the first swing arm is connected to the first rotation portion, and the first curved surface is arranged along a peripheral direction of the first rotation portion.

The second swing member includes a second rotation portion and a second swing arm, the second rotation portion is rotatably connected to the second rotation axis, the second swing arm is connected to the second rotation portion, and the second curved surface is arranged along a peripheral direction of the second rotation portion.

The two first curved surfaces are arranged at two ends of an axial direction of the first rotation portion, and the two second curved surfaces are arranged at two ends of an axial direction of the second rotation portion.

The sliding assembly includes two first abutting portions and two second abutting portions, the two first abutting portions are respectively configured to correspondingly abut against the two first curved surfaces, and the two second abutting portions are respectively configured to correspondingly abut against the two second curved surfaces.

In another possible implementation, the sliding assembly includes a first sliding member and a second sliding member, both the first sliding member and the second sliding member are provided with the first abutting portion and the second abutting portion, and the first sliding member and the second sliding member are detachably connected.

The first sliding member and the second sliding member are arranged in an "X" shape, to enable the two first abutting portions to be located on a same side and the two second abutting portions to be located on the other side.

In another possible implementation, a first matching portion is provided between the first abutting portion and the second abutting portion of the first sliding member, a groove is provided on the first matching portion, a second matching portion is provided between the first abutting portion and the second abutting portion of the second sliding member, and the second matching portion at least partially clamps with the groove.

In another possible implementation, the first sliding member and the second sliding member are formed through injection molding.

In another possible implementation, the first rotation portion includes a first rotation wall and a second rotation wall, the first rotation wall and the second rotation wall enclose a first axis hole, the first rotation axis passes through the first axis hole, the first swing arm is connected to a side that is of the first rotation wall and that is away from the second rotation wall, and the two first curved surfaces are arranged on two end surfaces of the second rotation wall along an axial direction of the first axis hole.

The second rotation portion includes a third rotation wall and a fourth rotation wall, the third rotation wall and the fourth rotation wall enclose a second axis hole, the second rotation axis passes through the second axis hole, the second swing arm is connected to a side that is of the third rotation wall and that is away from the fourth rotation wall, and the two second curved surfaces are arranged on two end surfaces of the fourth rotation wall along an axial direction of the second axis hole.

In another possible implementation, the first curved surface and the second curved surface are both spiral surfaces, and spiral directions of the first curved surface and the second curved surface are different.

In another possible implementation, the first swing member and the second swing member are formed through injection molding.

In another possible implementation, the sliding assembly further includes at least two axis sleeves, and the axis sleeves are respectively sleeved on the first rotation axis and the second rotation axis.

In another possible implementation, a side that is of the first abutting portion and that faces the first curved surface is provided with a first inclined surface, and the first inclined surface matches the first curved surface; and a side that is of the second abutting portion and that faces the second curved surface is provided with a second inclined surface, and the second inclined surface matches the second curved surface.

According to a second aspect, an electronic device is provided. The electronic device includes a first middle frame, a second middle frame, a flexible screen, and the foregoing synchronization mechanism.

The first middle frame is connected to a first swing member in the synchronization mechanism, and the second middle frame is separately connected to a second swing member in the synchronization mechanism.

The flexible screen covers the first middle frame and the second middle frame.

In a possible implementation, the electronic device further includes an engine base, a main swing member, and a damping swing member, and the synchronization mechanism, the main swing member, and the damping swing member are all mounted on the engine base.

In another possible implementation, the synchronization mechanism is located between the main swing member and the damping swing member.

### BRIEF DESCRIPTION OF DRAWINGS

FIG. 1 is a schematic structural diagram of an electronic device in a first state according to an embodiment of this application;
FIG. 2 is a schematic structural diagram of an electronic device in a second state according to an embodiment of this application;
FIG. 3 is a schematic structural diagram of an electronic device in a third state according to an embodiment of this application;
FIG. 4 is a schematic diagram of an exploded view of a structure of the electronic device shown in FIG. 3;
FIG. 5 is a schematic structural diagram of a synchronization mechanism at an angle of view according to an embodiment of this application;
FIG. 6 is a schematic structural diagram of a synchronization mechanism at another angle of view according to an embodiment of this application;
FIG. 7 is a schematic structural diagram of a swing member and a sliding member in amounted state according to an embodiment of this application;
FIG. 8 is an exploded view of a swing member and a sliding member according to an embodiment of this application;
FIG. 9 is a schematic structural diagram of a first swing member at an angle of view according to an embodiment of this application;
FIG. 10 is a schematic structural diagram of a first swing member at another angle of view according to an embodiment of this application;
FIG. 11 is a schematic structural diagram of a first swing member at still another angle of view according to an embodiment of this application;
FIG. 12 is a schematic structural diagram of a second swing member at an angle of view according to an embodiment of this application;
FIG. 13 is a schematic structural diagram of a second swing member at another angle of view according to an embodiment of this application;
FIG. 14 is a schematic structural diagram of a second swing member at still another angle of view according to an embodiment of this application;
FIG. 15 is a schematic structural diagram of a second swing member at an angle of view of a side surface according to an embodiment of this application;
FIG. 16 is a schematic structural diagram of a first sliding member at an angle of view according to an embodiment of this application;
FIG. 17 is a schematic structural diagram of a first sliding member at another angle of view according to an embodiment of this application;
FIG. 18 is another schematic structural diagram of a first sliding member at still another angle of view according to an embodiment of this application;
FIG. 19 is a schematic structural diagram of a first sliding member at yet another angle of view according to an embodiment of this application;
FIG. 20 is a schematic structural diagram of a first sliding member at a top view according to an embodiment of this application;
FIG. 21 is a schematic structural diagram of a second sliding member at an angle of view according to an embodiment of this application;
FIG. 22 is a schematic structural diagram of a second sliding member at another angle of view according to an embodiment of this application;
FIG. 23 is a schematic structural diagram of a second sliding member at still another angle of view according to an embodiment of this application;
FIG. 24 is a schematic structural diagram of a second sliding member at yet another angle of view according to an embodiment of this application;
FIG. 25 is a schematic structural diagram of a second sliding member at still yet another angle of view according to an embodiment of this application;
FIG. 26 is a partial exploded view of a folding apparatus in an electronic device according to an embodiment of this application;
FIG. 27 is a partial schematic structural diagram of a folding apparatus that is in an electronic device and that is in a fully unfolded state according to an embodiment of this application;
FIG. 28 is a partial schematic structural diagram of a folding apparatus that is in an electronic device and that is in a folded state according to an embodiment of this application;
FIG. 29 is a partial schematic structural diagram of a folding apparatus that is in an electronic device and that is in a fully unfolded state according to an embodiment of this application;
FIG. 30 is a cross-sectional view along a direction of A-A in FIG. 29;
FIG. 31 is a partial schematic structural diagram of a folding apparatus that is in an electronic device and that is in a semi-folded state according to an embodiment of this application;
FIG. 32 is a cross-sectional view along a direction of B-B in FIG. 31;
FIG. 33 is a partial schematic structural diagram of a folding apparatus that is in an electronic device and that is in a folded state according to an embodiment of this application; and
FIG. 34 is a cross-sectional view along a direction of C-C in FIG. 33.

### Reference Numerals:

1: synchronization mechanism; 11: first rotation axis; 12: second rotation axis; 13: first swing member; 131: first rotation portion; 1311: first rotation wall; 1312: second rotation wall; 132: first swing arm; 133: first curved surface; 14: second swing member; 141: second rotation portion; 1411: third rotation wall; 1412: fourth rotation wall; 142: second swing arm; 143: second curved surface; 15: sliding assembly; 151: first sliding member; 152: second sliding member; 153: first abutting portion; 1531: first inclined surface; 154: second abutting portion; 1541: second inclined surface; 155: first matching portion; 1551: groove; 156: second matching portion; 157: axis sleeve;
2: first middle frame;
3: second middle frame;
4: engine base;
5: main swing member;
6: damping swing member;
200: folding apparatus; 210: first housing; 220: second housing; 100: folding mechanism; 230: first accommodation slot; 240: second accommodation slot;
300: display screen; 310: first part; 320: second part; 330: foldable part; 340: display surface; 350: mounting surface;
500: electronic device; 501: folding apparatus; and 502: display screen.

### DESCRIPTION OF EMBODIMENTS

Embodiments of this application are described below in detail, and examples of the embodiments are shown in the accompanying drawings, where the same or similar elements or the elements having same or similar functions are denoted by the same or similar reference numerals throughout the descriptions. The embodiments described below with reference to the accompanying drawings are exemplary and used merely for explaining this application, and should not be construed as a limitation on this application.

**In** the descriptions of this application, it should be understood that an orientation or a position relationship indicated by the terms such as "inside" and "outside" is an orientation or a position relationship shown in the accompanying drawings, and is merely used to facilitate the descriptions of this application and simplify the descriptions, rather than indicating or implying that a specified apparatus or element needs to have a specific orientation, or needs to be constructed in a specific orientation, or needs to be operated in a specific orientation. Therefore, such terms cannot be construed as a limitation on this application.

For ease of describing the technical solutions in the embodiments of this application clearly, in the embodiments of this application, terms such as "first" and "second" are used to distinguish same or similar items with basically same functions and roles. For example, a first limiting portion and a second limiting portion are merely intended to distinguish between different limiting portions, but not to limit a sequence of the limiting portions. A person skilled in the art may understand that the terms such as "first", "second" do not limit a quantity and an execution sequence, and the terms such as "first", "second" are not limited to be necessarily different.

It should be noted that, in this application, words such as "in an embodiment" or "for example" are used to represent giving an example, an illustration, or a description. Any embodiment or design solution described as "in an embodiment" or "for example" in this application should not be construed as being preferred or advantageous over other embodiments or design solutions. Exactly, use of the words such as "in an embodiment" or "for example" is intended to present a related concept in a specific manner.

In this application, unless otherwise clearly specified and limited, terms such as "connect" and "connection" should be understood in a broad sense. For example, the "connection" may be a fixed connection, a detachable connection, an integral connection, or a touch connection; may be a mechanical connection or an electrical connection; may be a direct connection or an indirect connection through an intermediate medium; or may be connection between two elements or interaction between two elements. A person of ordinary skill in the art may understand specific meanings of the terms in this application according to specific situations.

To make the objectives, technical solutions, and advantages of this application clearer, this application is further described in detail with reference to the accompanying drawings and embodiments.

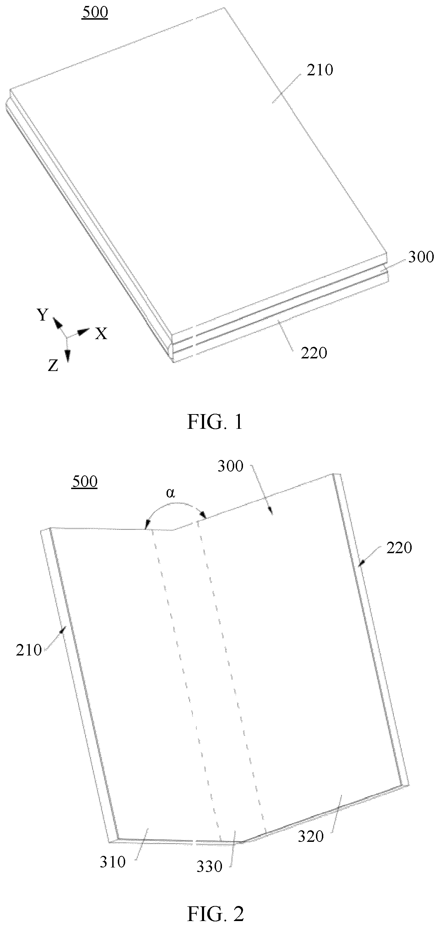

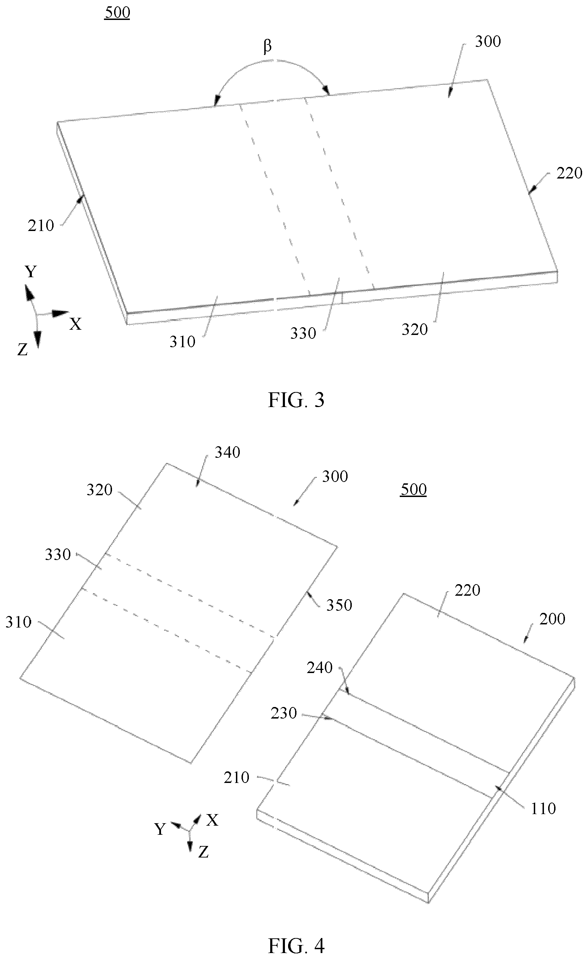

Referring to FIG. 1 to FIG. 3, FIG. 1 is a schematic structural diagram of an electronic device 500 in a first state according to an embodiment of this application, FIG. 2 is a schematic structural diagram of an electronic device 500 in a second state according to an embodiment of this application, and FIG. 3 is a schematic structural diagram of an electronic device 500 in a third state according to an embodiment of this application.

For ease of description, a width direction of the electronic device 500 is defined as a direction X, a length direction of the electronic device 500 is defined as a direction Y, and a thickness direction of the electronic device 500 is defined as a direction Z. The direction X, the direction Y, and the direction Z are perpendicular to each other.

With the development of flexible display technologies, an electronic device to which a foldable screen is applied is increasingly favored by people because of portability and functional diversity of the electronic device. The electronic device 500 to which the foldable screen may be applied includes, but is not limited to, a cellphone (cellphone), a notebook computer (notebook computer), a tablet personal computer (tablet personal computer), a laptop computer (laptop computer), a personal digital assistant (personal digital assistant), a wearable device (wearable device), an in-vehicle device (mobile device), an augmented reality (augmented reality, AR)/virtual reality (virtual reality, VR) device, or the like, or may be a professional photographing device such as a digital camera, a single lens reflex camera/a micro lens camera, a sport camera, a tripod-head camera, or an unmanned aerial vehicle. In the embodiments of this application, an example in which the electronic device 500 is a cellphone is used for description.

The electronic device 500 shown in FIG. 1 is in a folded state, the electronic device 500 shown in FIG. 2 is in a semi-folded state, and the electronic device 500 shown in FIG. 3 is in a flattened state. An unfolding angle α of the electronic device 500 shown in FIG. 2 is 90 degrees, and an unfolding angle β of the electronic device 500 shown in FIG. 3 is 180 degrees.

It should be noted that, each angle described in the embodiments of this application is allowed to have a slight deviation. For example, that the unfolding angle α of the electronic device 500 shown in FIG. 2 is 90 degrees refers to that α may be 90 degrees or approximately 90 degrees, such as 80 degrees, 85 degrees, 95 degrees, or 100 degrees. That the unfolding angle β of the electronic device 500 shown in FIG. 3 is 180 degrees refers to that β may be 180 degrees or approximately 180 degrees, such as 170 degrees, 175 degrees, 185 degrees, or 190 degrees. Angles described below by using examples may be understood in the same way.

The electronic device 500 shown in the embodiments of this application is an electronic device that can be folded once. In some other embodiments, the electronic device 500 may alternatively be an electronic device that can be folded for a plurality of times (at least twice). In this case, the electronic device 500 may include a plurality of parts. Two adjacent parts may be folded relatively close to each other until the electronic device 500 is in the folded state, and the two adjacent parts may be unfolded relatively far away from each other until the electronic device 500 is in the flattened state.

Referring to FIG. 4, FIG. 4 is a schematic diagram of an exploded view of a structure of the electronic device 500 shown in FIG. 3.

The electronic device 500 includes a folding apparatus 200 and a display screen 300, and the display screen 300 is mounted on the folding apparatus 200. The display screen 300 includes a display surface 340 and a mounting surface 350, and the display surface 340 and the mounting surface 350 are oppositely arranged. The display surface 340 is configured to display a text, an image, a video, or the like. The display screen 300 includes a first part 310, a second part 320, and a foldable part 330. The foldable part 330 is located between the first part 310 and the second part 320, and the foldable part 330 may be bent along the Y direction. The first part 310, the second part 320, and the foldable part 330 jointly form the display screen 300. In embodiments, the display screen 300 is a flexible display screen, for example, an organic light-emitting diode (organic light-emitting diode, OLED) display screen, an active-matrix organic light-emitting diode or an active-matrix organic light-emitting diode (active-matrix organic light-emitting diode, AMOLED) display screen, a mini-organic light-emitting diode (mini-organic light-emitting diode) display screen, a micro-organic light-emitting diode (micro-organic light-emitting diode) display screen, a micro-organic light-emitting diode (micro-organic light-emitting diode) display screen, or a quantum dot light-emitting diode (quantum dot light emitting diodes, QLED) display screen.

The folding apparatus 200 includes a first housing 210, a second housing 220, and a folding mechanism 100. The first housing 210 is provided with a first accommodation slot 230, and the second housing 220 is provided with a second accommodation slot 240. The first accommodation slot 230 and the second accommodation slot 240 communicate to form an accommodation slot of the folding mechanism 100. The folding mechanism 100 is mounted in the accommodation slot, and is fixedly connected to the first housing 210 and the second housing 220, so that the first housing 210 is rotatably connected to the second housing 220. The display screen 300 is mounted on the folding apparatus 200, and the mounting surface 350 is fixedly connected to the folding apparatus 200. Specifically, the first housing 210 carries the first part 310 of the display screen 300, and the second housing 220 carries the second part 320. In other words, the first part 310 is mounted on the first housing 210, and the second part 320 is mounted on the second housing 220. The folding mechanism 100 and the foldable part 330 are oppositely arranged. The first housing 210 and the second housing 220 may be rotated relatively to each other through the folding mechanism 100, so that the folding apparatus 200 is switched between the folded state and the flattened state.

With reference to FIG. 1, the first housing 210 and the second housing 220 are rotated relatively to each other through the folding mechanism 100, and the first housing 210 and the second housing 220 relatively approach to each other to drive the display screen 300 to fold, so that the electronic device 500 is folded. When the electronic device 500 is in the folded state, the foldable part 330 of the display screen 300 is bent, and the first part 310 and the second part 320 are oppositely arranged. In this case, the display screen 300 is located between the first housing 210 and the second housing 220, so that a probability of the display screen 300 being damaged can be greatly reduced, thereby effectively protecting the display screen 300. The electronic device includes an engine base, a main swing member, a damping swing member, and a synchronization mechanism.

Referring to FIG. 2 and FIG. 4, the first housing 210 and the second housing 220 are rotated relatively to each other through the folding mechanism 100, and the first housing 210 and the second housing 220 relatively retreat to drive the display screen 300 to be unfolded, so that the electronic device 500 is unfolded to the semi-folded state. When the electronic device 500 is in the semi-unfolded state, the first housing 210 and the second housing 220 are unfolded until an angle between the first housing 210 and the second housing 220 is α. The first part 310 and the second part 320 are relatively unfolded, and drive the foldable part 330 to be unfolded. In this case, an angle between the first part 310 and the second part 320 is α. In embodiments, α is 90 degrees. In another embodiment, α may alternatively be approximately 90 degrees, or may be 80 degrees, 85 degrees, 95 degrees, 100 degrees, or the like.

Referring to FIG. 3 and FIG. 4, the first housing 210 and the second housing 220 are rotated relatively to each other through the folding mechanism 100, and the first housing 210 and the second housing 220 relatively retreat to drive the display screen 300 to be unfolded, until the electronic device 500 is flattened. When the folding apparatus 200 is in the flattened state, an angle between the first housing 210 and the second housing 220 is β. The foldable part 330 is unfolded, and the first part 310 and the second part 320 are relatively unfolded. In this case, angles between the first part 310, the second part 320, and the foldable part 330 are all β, and the display screen 300 has a display region with a large area, so that large-screen display on the electronic device 500 is implemented, and user experience is improved. In embodiments, β is 180 degrees. In another embodiment, β may alternatively be approximately 180 degrees, or may be 170 degrees, 175 degrees, 185 degrees, 190 degrees, or the like.

It should be noted that, the angle α and the angle β are both angles between the first housing 210 and the second housing 220, and are merely used herein to distinguish between different angles between the first housing 210 and the second housing 220 in different states of the electronic device 500. The angle α is an angle between the first housing 210 and the second housing 220 when the electronic device 500 is in the semi-folded state. The angle β is an angle between the first housing 210 and the second housing 220 when the electronic device 500 is in the flattened state.

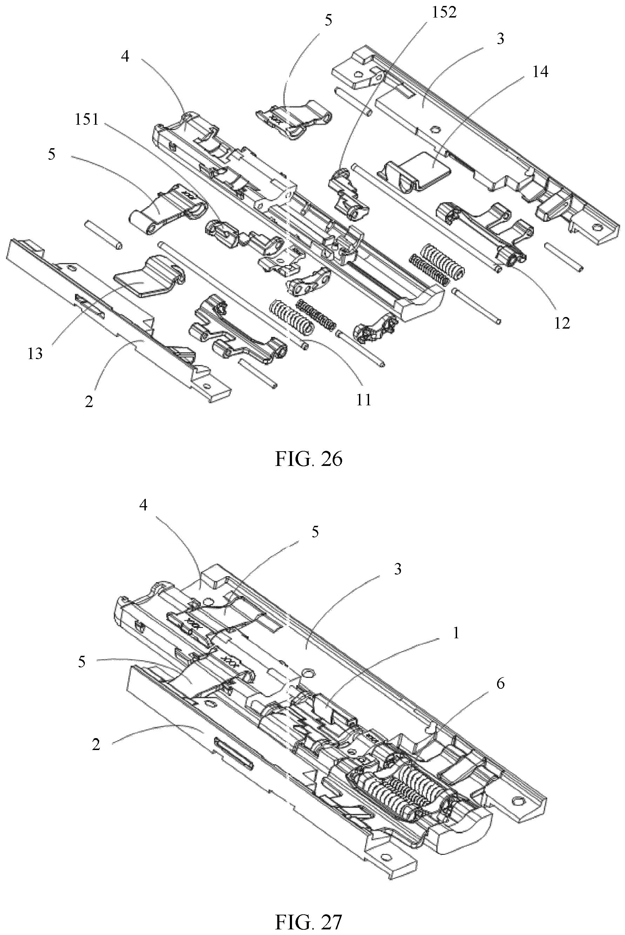

Referring to FIG. 26, the folding mechanism 100 includes an engine base 4, a main swing member 5, a damping swing member 6, and a synchronization mechanism 1. The synchronization mechanism 1, the main swing member 4, and the damping swing member 6 are all mounted on the engine base 4. The first housing 210 includes a first middle frame 2. The second housing 220 includes a second middle frame 3. The first middle frame 2 is connected to a same side of the synchronization mechanism 1, the main swing member 5, and the damping swing member 6. The second middle frame 3 is connected to the other side of the synchronization mechanism 1, the main swing member 5, and the damping swing member 6.

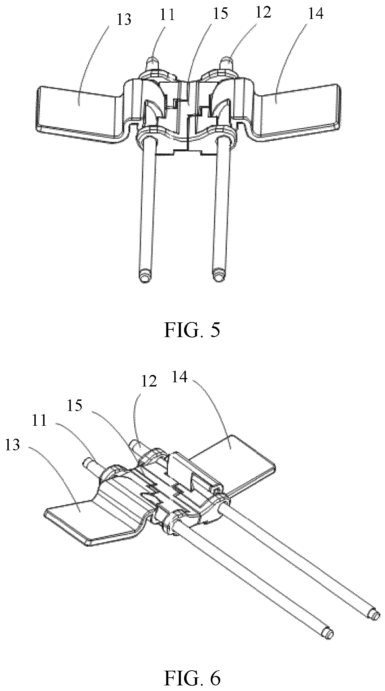

Referring to FIG. 5, FIG. 5 is a schematic structural diagram of the synchronization mechanism 1 in the electronic device 500 shown in FIG. 4.

According to a first aspect, as shown in FIG. 5 to FIG. 8, the synchronization mechanism may include a first rotation axis 11, a second rotation axis 12, a first swing member 13, a second swing member 14, and a sliding assembly 15.

The first swing member 13 is rotatably connected to the first rotation axis 11, the second swing member 14 is rotatably connected to the second rotation axis 12, and the first rotation axis 11 is arranged in parallel with the second rotation axis 12.

The sliding assembly 15 connects the first swing member 13 and the second swing member 14. If a user acts on the first swing member 13, the first swing member 13 rotates around the first rotation axis 11. When the first swing member 13 rotates around the first rotation axis 11, the sliding assembly 15 is driven to move along an axial direction of the first rotation axis 11 and the second rotation axis 12. The sliding assembly 15 drives the second swing member 14 to rotate around the second rotation axis 12. If the user acts on the second swing member 14, the second swing member 14 rotates around the second rotation axis 12. When the second swing member 14 rotates around the second rotation axis 12, the sliding assembly is driven to move along the axial direction of the first rotation axis 11 and the second rotation axis 12. The sliding assembly drives the first swing member 13 to rotate around the first rotation axis 11.

The sliding assembly 15 is configured to enable, when moving along the axial direction of the first rotation axis 11 and the second rotation axis 12, a rotation direction of the second swing member 14 to be opposite to a rotation direction of the first swing member 13. If a direction of a force applied by the sliding assembly 15 on a peripheral direction of rotation of the first swing member 13 is opposite to a direction of a force applied by the sliding assembly 15 on a peripheral direction of rotation of the second swing member 14, during movement of the sliding assembly 15, the first swing member 13 and the second swing member 14 are enabled to synchronously and reversely rotate based on the opposite forces.

In this embodiment, the first rotation axis 11 is arranged in parallel with the second rotation axis 12, the first swing member 13 is mounted on the first rotation axis 11, and the second swing member 14 is mounted on the second rotation axis 12. Optionally, the first swing member 13 and the second swing member 14 are arranged in a mirroring manner, and the first swing member 13 and the second swing member 14 synchronously rotate along different directions, to implement unfolding or folding.

When the synchronization mechanism 1 is used in a foldable electronic device, the first swing member 13 and the second swing member 14 of the synchronization mechanism 1 are configured to drive a foldable screen to be folded or unfolded.

In the solution shown in this embodiment of this application, the synchronization mechanism 1 includes the first rotation axis 11, the second rotation axis 12, the first swing member 13, the second swing member 14, and the sliding assembly 15. The first swing member 13 may rotate around the first rotation axis 11, and the second swing member 14 may rotate around the second rotation axis 12. The first swing member 13, the second swing member 14, and the sliding assembly 15 are configured as follows: when the first swing member 13 rotates, the sliding assembly 15 is driven to move along the axial direction of the first rotation axis 11 and the second rotation axis 12, and during movement of the sliding assembly 15, the second swing member 14 is driven to rotate around the second rotation axis 12, so that the first swing member 13 and the second swing member 14 synchronously and reversely rotate. Alternatively, when the second swing member 14 rotates around the second rotation axis 12, the sliding assembly 15 is driven to rotate along the second rotation axis 12 and the first rotation axis 11, and during movement of the sliding assembly 15, the first swing member 13 is driven to rotate around the first rotation axis 11, so that the first swing member 13 and the second swing member 14 synchronously and reversely rotate. Movement of the sliding assembly 15 may drive the second swing member 14 and the first swing member 13 to synchronously and reversely swing. The sliding assembly 15 may be reduced in size along a radial direction of a rotation axis, so that the sliding assembly 15 can be miniaturized (lightened and thinned). In addition, the sliding assembly 15 is a non-toothed component, and teeth of the gears do not need to be processed, so that the sliding assembly 15 is easy to process, and costs are low.

In the synchronization mechanism 1 shown in this embodiment of this application, the sliding assembly 15 cooperates with the first swing member 13 and the second swing member 14, so that the first swing member 13 and the second swing member 14 synchronously and reversely rotate in a plurality of implementations. Two of the implementations are listed below to describe miniaturization and low costs of the synchronization mechanism 1 in this embodiment of this application.

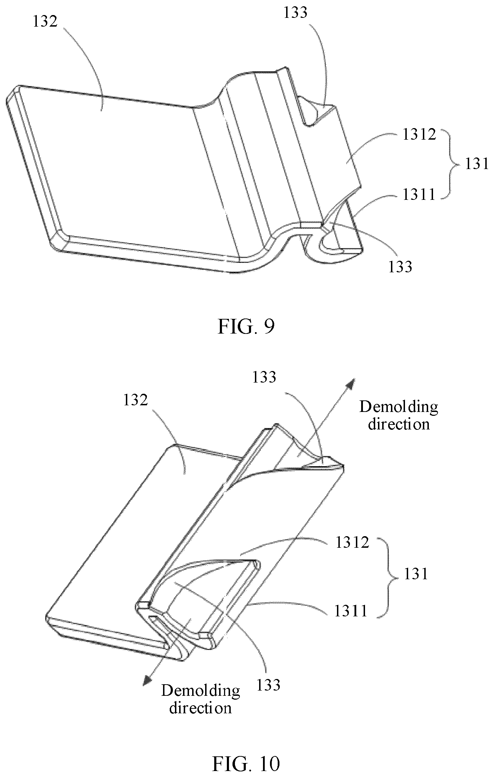

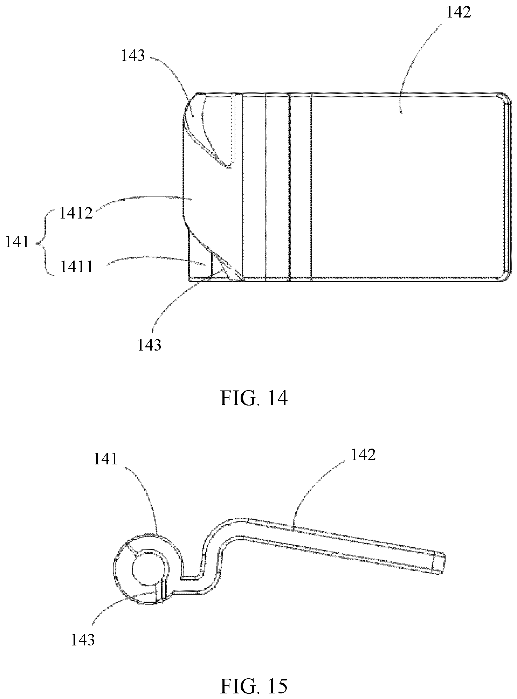

In a possible implementation, as shown in FIG. 9 to FIG. 15, the first swing member 13 of the synchronization mechanism 1 includes two first curved surfaces 133 arranged along the rotation direction, the second swing member 14 includes two second curved surfaces 143 arranged along the rotation direction, and the first curved surface 133 and the second curved surface 143 are arranged in a mirroring manner.

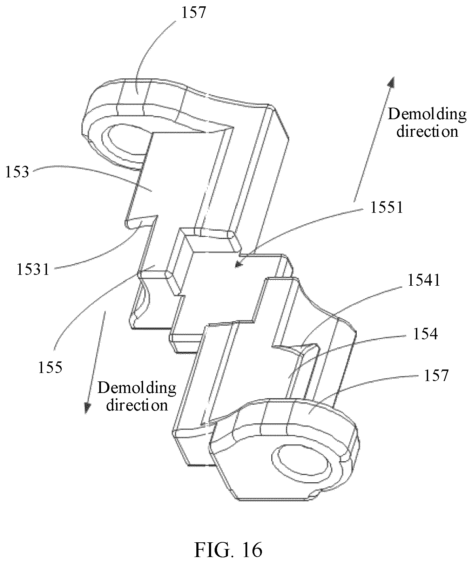

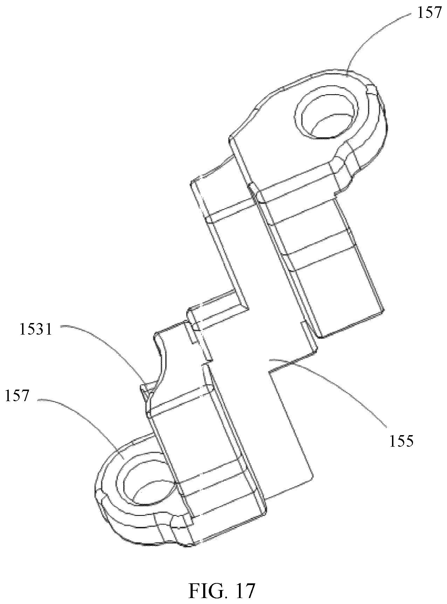

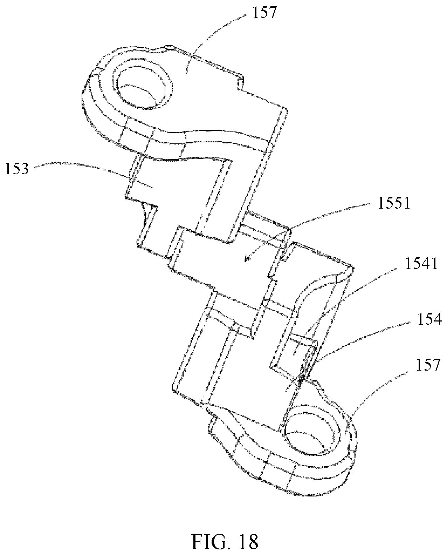

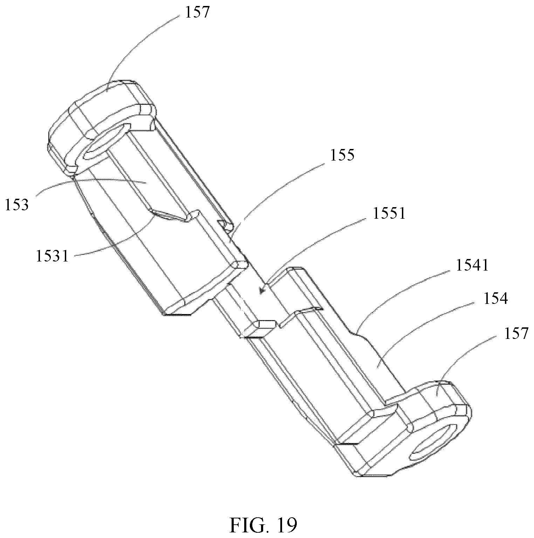

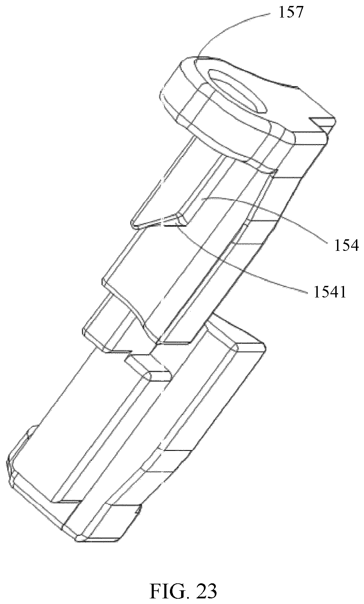

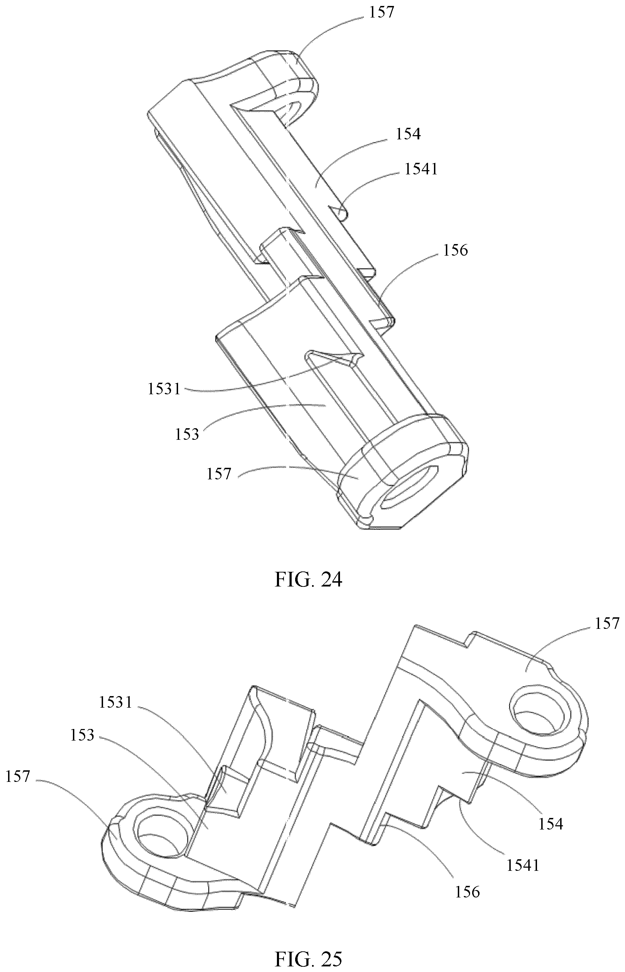

As shown in FIG. 16 to FIG. 25, the sliding assembly 15 includes a first abutting portion 153 and a second abutting portion 154. The first abutting portion 153 is configured to abut against the first curved surface 133, and the second abutting portion 154 is configured to abut against the second curved surface 143, to enable the first abutting portion 153 to move, when the first swing member 13 rotates, along the axial direction of the first rotation axis 11 under an action of the first curved surface 133. The second abutting portion 154 acts on the second curved surface 143, to drive the second swing member 14 to rotate around the second rotation axis 12.

Positions of a first endpoint and a second endpoint of the first curved surface 133 are not on a same circular line, and positions of a first endpoint and a second endpoint of the second curved surface 143 are not on a same circular line similarly. The first endpoint is a start point of a curved surface, and the second endpoint is an end point of the curved surface.

In this implementation, the first abutting portion 153 abuts against the first curved surface 133, and a force can be applied between the first abutting portion 153 and the first curved surface 133. The second abutting portion 154 abuts against the second curved surface 143, and a force can be applied between the second abutting portion 154 and the second curved surface 143. Because the first curved surface 133 is arranged along the rotation direction of the first swing member 13, when a force acts on the first curved surface 133, the force is decomposed along the rotation direction of the first swing member 13, so that the first swing member 13 rotates. Similarly, the second curved surface 143 is arranged along the rotation direction of the second swing member 14, and when a force acts on the second curved surface 143, the force is decomposed along the rotation direction of the second swing member 14, so that the second swing member 14 rotates.

The first abutting portion 153 is subjected to the force of the first curved surface 133. When the first swing member 13 rotates, different positions of the first curved surface 133 apply forces to the first abutting portion 153, so that the first abutting portion 153 moves along the axial direction of the first rotation axis 11. The second abutting portion 154 is subjected to the force of the second curved surface 143. When the second swing member 14 rotates, different positions of the second curved surface 143 apply forces to the second abutting portion 154, so that the second abutting portion 154 moves along the axial direction of the second rotation axis 12.

When the user rotates the first swing member 13, the first swing member 13 rotates along the first rotation axis 11. In a procedure in which the first swing member 13 rotates along the first rotation axis 11, the different positions of the first curved surface 133 apply forces to the first abutting portion 153, so that the sliding assembly 15 moves along the axial direction of the first rotation axis 11. In a procedure in which the sliding assembly 15 moves along the axial direction of the first rotation axis 11, the second abutting portion 154 of the sliding assembly 15 applies a force to the second curved surface 143 of the second swing member 14, and the force is decomposed along the rotation direction of the second swing member 14, so that the second swing member 14 rotates along the second rotation axis 12. When the first swing member 13 and the second swing member 14 are used, the first curved surface 133 on the first swing member 13 and the second curved surface 143 on the second swing member 14 are arranged in a mirroring manner. In this way, when the sliding assembly 15 moves, the rotation direction of the second swing member 14 is always opposite to the rotation direction of the first swing member 13.

The following describes components involved in the synchronization mechanism 1 provided in this implementation.

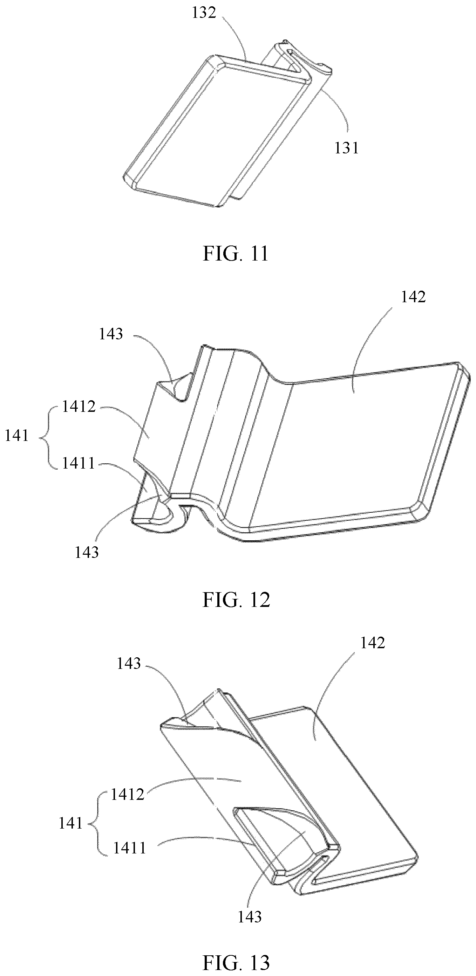

In this implementation, as shown in FIG. 9 to FIG. 11, the first swing member 13 includes a first rotation portion 131 and a first swing arm 132. The first rotation portion 131 is rotatably connected to the first rotation axis 11. The first swing arm 132 is connected to the first rotation portion 131. The first curved surface 133 is arranged along a peripheral direction of the first rotation portion 131. As shown in FIG. 12 to FIG. 15, the second swing member 14 includes a second rotation portion 141 and a second swing arm 142. The second rotation portion 141 is rotatably connected to the second rotation axis 12. The second swing arm 142 is connected to the second rotation portion 141. The second curved surface 143 is arranged along a peripheral direction of the second rotation portion 141.

The first swing arm 132 and the second swing arm 142 are configured to be connected to the middle frame of the electronic terminal, to drive the foldable screen on the middle frame to swing, for example, to be folded or unfolded. When the first swing member 13 and the second swing member 14 are in a mounted state, the first rotation portion 131 and the second rotation portion 141 are adjacent to each other. When rotating with the first rotation portion 131, the first swing arm 132 swings from a side away from the second swing arm 142 to the second swing arm 142. When rotating with the second rotation portion 141, the second swing arm 142 swings from a side away from the first swing arm 132 to the first swing arm 132. Optionally, when the he first swing arm 132 and the second swing arm 142 are in the unfolded state, the first swing arm 132 and the second swing arm 142 extend along opposite directions, and the first rotation portion 131 and the second rotation portion 141 are located between the first swing arm 132 and the second swing arm 142. When the first swing arm 132 and the second swing arm 142 are in the folded state (folded), the first swing arm 132 and a second swing arm extend along a same direction, and the first swing arm 132 and the second swing arm 142 are parallel to each other.

In this implementation, the two first curved surfaces 133 are arranged at two ends of an axial direction of the first rotation portion 131, and the two second curved surfaces 143 are arranged at two ends of an axial direction of the second rotation portion 141. Correspondingly, the sliding assembly 15 includes two first abutting portions 153 and two second abutting portions 154. The two first abutting portions 153 are respectively configured to correspondingly abut against the two first curved surfaces 133, and the two second abutting portions 154 are respectively configured to correspondingly abut against the two second curved surfaces 143. It may be understood that, the two ends of the axial direction refer to two ends of a lengthening direction of an axis, and refer to two end surfaces of the axis. As shown in FIG. 10, the two ends of the axial direction refer to two ends of the first rotation portion 131 along a demolding direction.

When the first swing member 13 rotates in a first direction, one first curved surface 133 abuts against one first abutting portion 153, to push the sliding assembly 15 to move along a direction. One second abutting portion 154 of the sliding assembly 15 abuts against one second curved surface 143, to drive the second swing member 14 to swing. The first curved surface 133 and the second curved surface 143 are distributed on opposite sides of the axial direction of the first rotation axis 11 or the axial direction of the second rotation axis 12.

When the first swing member 13 rotates in a second direction, the other first curved surface 133 abuts against the other first abutting portion 153, to push the sliding assembly 15 to move along another direction. The other second abutting portion 154 of the sliding assembly 15 abuts against the other second curved surface 143, to drive the second swing member 14 to swing. The other first curved surface 133 and the other second curved surface 143 are distributed on opposite sides of the axial direction of the first rotation axis 11 or the axial direction of the second rotation axis 12.

In embodiments, the first curved surface 133 is arranged on an end surface of the first swing member 13, and the second curved surface 143 is arranged on an end surface of the second swing member 14. In this way, the first curved surface 133 may be directly processed on the end surface of the first swing member 13, and the second curved surface 143 may be processed on the end surface of the second swing member 14, so that processing of the first swing member 13 and the second swing member 14 is more simplified, processing efficiency is improved, and processing costs are further reduced.

In addition, the first swing member 13 and the second swing member 14 may be directly formed through injection molding, to implement batch injection without other processing, so that generation efficiency is further improved, and production costs are reduced. It may be understood that, the two first curved surfaces 133 are arranged at the two ends of the axial direction of the first rotation portion 131, the two second curved surfaces 143 are arranged at the two ends of the axial direction of the second rotation portion 141, and there are physical structures between the two first curved surfaces 133 and between the two second curved surfaces 143. As shown in FIG. 10, direct injection molding may be implemented by designing a model structure, and demolding is performed from the two ends of the axial direction of the rotation portion. The first swing member 13 and the second swing member 14 are easy to be demolded, so that feasibility of batch injection molding of a model is improved. In addition, through injection molding, a procedure of processing the curved surface can be omitted, a processing error is reduced, and manufacturing precision of the curved surface is improved, so that stability of the first swing member 13 and the second swing member 14 of the synchronization mechanism 1 in a swing procedure is improved, and when the first swing member 13 and the second swing member 14 are used in the electronic device, a touch feeling for the user when the user opens and closes the electronic device is improved.

In a possible implementation of the sliding assembly 15, the sliding assembly 15 may be in an integral structure. The first abutting portions 153 and the second abutting portions 154 are respectively arranged on the sliding assembly 15 at four positions corresponding to the first curved surfaces 133 and the second curved surfaces 143. The first abutting portions 153 are located on a same side and are in a one-to-one correspondence with the two first curved surfaces 133, to abut against the first curved surfaces 133. The second abutting portions 154 are located on a same side and are in a one-to-one correspondence with the two second curved surfaces 143, to abut against the second curved surfaces 143.

In another possible implementation of the sliding assembly 15, as shown in FIG. 16 to FIG. 25, the sliding assembly 15 includes a first sliding member 151 and a second sliding member 152, both the first sliding member 151 and the second sliding member 152 are provided with the first abutting portion 153 and the second abutting portion 154, and the first sliding member 151 and the second sliding member 152 are detachably connected.

In this implementation, the first abutting portion 153 of the first sliding member 151 abuts against one first curved surface 133 of the first swing member 13, and the second abutting portion 154 of the first sliding member 151 abuts against one second curved surface 143 of the second swing member 14. The first abutting portion 153 of the second sliding member 152 abuts against the other first curved surface 133 of the first swing member 13, and the second abutting portion 154 of the second sliding member 152 abuts against the other second curved surface 143 of the second swing member 14.

When the first swing member 13 drives the first sliding member 151 to move, the second abutting portion 154 of the first sliding member 151 or the second abutting portion 154 of the second sliding member 152 drives, under an action of the second curved surface 143, the second swing member 14 to rotate. Simultaneously, the first sliding member 151 drives the second sliding member 152 to move along the axial direction of the first rotation axis 11 and the second rotation axis 12, so that the first abutting portion 153 of the second sliding member 152 limits axial displacement of the first curved surface 133, and the second abutting portion 154 limits axial displacement of the second curved surface 143. In this way, the first sliding member 151 cooperates with the second sliding member 152, so that the first swing member 13 and the second swing member 14 smoothly and synchronously swing.

In an implementation, the first sliding member 151 and the second sliding member 152 are distributed along the axial direction of the first rotation axis 11 or the second rotation axis 12. The first abutting portion 153 and the second abutting portion 154 of the first sliding member 151 are oppositely arranged on two sides of the first sliding member 151, to respectively abut against the first swing member 13 and the second swing member 14, and the first abutting portion 153 and the second abutting portion 154 of the second sliding member 152 are oppositely arranged on two sides of the second sliding member 152, to respectively abut against the first swing member 13 and the second swing member 14. The first sliding member 151 and the second sliding member 152 are located on a same horizontal plane.

In this implementation, when the first swing member 13 drives the first sliding member 151 to move, the first sliding member 151 drives the second sliding member 152 to move, so that the second abutting portion 154 of the second sliding member 152 drives, under an action of the second curved surface 143 of the second swing member 14, the second swing member 14 to rotate. Therefore, the first swing member 13 and the second swing member 14 synchronously rotate.

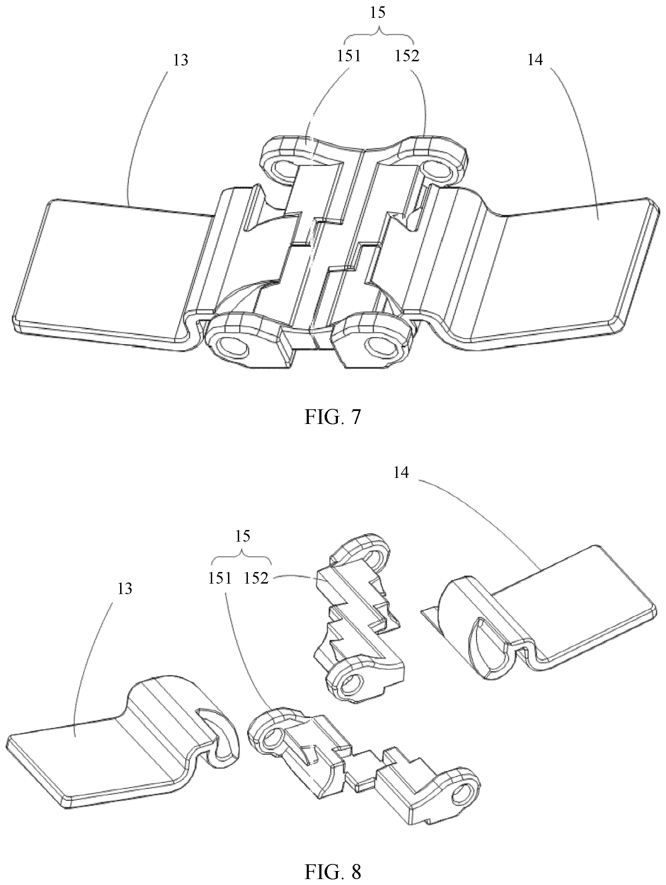

As shown in FIG. 7 and FIG. 8, the first sliding member 151 and the second sliding member 152 are arranged in an "X" shape, to enable the two first abutting portions 153 to be located on a same side and the two second abutting portions 154 to be located on the other side. According to the embodiments of the invention, the first sliding member 151 and the second sliding member 152 are intersected, the first abutting portion 153 of the first sliding member 151 and the second abutting portion 154 of the second sliding member 152 are oppositely arranged, and the first abutting portion 153 of the second sliding member 152 and the second abutting portion 154 of the first sliding member 151 are oppositely arranged.

In this implementation, when the first swing member 13 drives the first sliding member 151 to move, during movement of the first sliding member 151, the second abutting portion 154 of the first sliding member 151 drives, under an action of the second curved surface 143 of the second swing member 14, the second swing member 14 to rotate, so that the first swing member 13 and the second swing member 14 synchronously rotate. In comparison with the foregoing implementation, in this implementation, the second swing member 14 does not need to rotate through transmission between the first sliding member 151 and the second sliding member 152, so that a transmission error is reduced, and synchronous rotation of the first swing member 13 and the second swing member 14 is more stable.

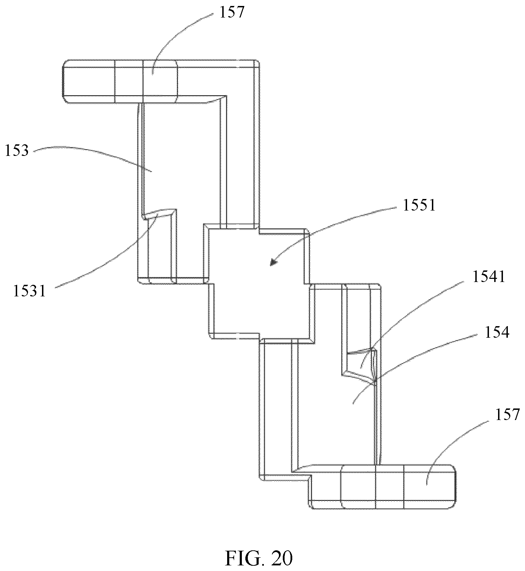

Optionally, in embodiments, as shown in FIG. 16 and FIG. 20, a side that is of the first abutting portion 153 and that faces the first curved surface 133 is provided with a first inclined surface 1531, and the first inclined surface 1531 matches the first curved surface 133. A side that is of the second abutting portion 154 and that faces the second curved surface 143 is provided with a second inclined surface 1541, and the second inclined surface 1541 matches the second curved surface 143. The first abutting portion 153 abuts against and matches the first curved surface 133 through the first inclined surface 1531, and the second abutting portion 154 abuts against and matches the second curved surface 143 through the second inclined surface 1541.

Because the first curved surfaces 133 are located at the two ends of the axial direction of the first rotation portion 131, the two first curved surfaces 133 are arranged opposite to each other. An accommodation slot is formed between the two first abutting portions 153, the two first inclined surfaces 1531 are arranged on two opposite slot walls of the accommodation slot, and a side that is of the first rotation portion 131 of the first swing member 13 and on which the first curved surface 133 is provided is accommodated in the accommodation slot, so that the first inclined surfaces 1531 respectively abut against the first curved surfaces 133 at two ends.

Optionally, in this implementation, the first rotation portion 131 includes a first rotation wall 1311 and a second rotation wall 1312, the first rotation wall 1311 and the second rotation wall 1312 enclose a first axis hole, the first rotation axis 11 passes through the first axis hole, the first swing arm 132 is connected to a side that is of the first rotation wall 1311 and that is away from the second rotation wall 1312, and the two first curved surfaces 133 are arranged on two end surfaces of the second rotation wall 1312 along an axial direction of the first axis hole.

The second rotation portion 141 includes a third rotation wall 1411 and a fourth rotation wall 1412, the third rotation wall 1411 and the fourth rotation wall 1412 enclose a second axis hole, the second rotation axis 12 passes through the second axis hole, the second swing arm 142 is connected to a side that is of the third rotation wall 1411 and that is away from the fourth rotation wall 1412, and the two second curved surfaces 143 are arranged on two end surfaces of the fourth rotation wall 1412 along an axial direction of the second axis hole.

Optionally, the first curved surface 133 is arranged on the second rotation wall 1312, and extends along a rotation direction of the second rotation wall 1312. The second curved surface 143 is arranged on the fourth rotation wall 1412, and extends along a rotation direction of the fourth rotation wall 1412. Cross sections of the second rotation wall 1312 and the fourth rotation wall 1412 each are a semi-circle. In other words, an arc length of proj ection of the first curved surface 133 and the second curved surface 143 along the axial direction each are less than or equal to an arc length of the semi-circle. In this embodiment, an extension angle and an inclined angle of the first curved surface 133 and the second curved surface 143 are set to adapt the first swing arm 132 and the second swing arm 142, so that the first swing arm 132 and the second swing arm 142 rotate from the unfolded state to the folded state. In other words, when the first abutting portion 153 slides from the first endpoint of the first curved surface 133 to the second endpoint, the second abutting portion 154 is driven to slide from the first endpoint of the second curved surface 143 to the second endpoint. In this case, the first swing arm 132 and the second swing arm 142 rotate from the unfolded state to the folded state, or rotate from the folded state to the unfolded state. In this implementation, the design of the first curved surface 133 and the second curved surface 143 may synchronously drive the first swing arm 132 and the second swing arm 142 to synchronously rotate, and may also facilitate molding and demolding, to implement injection molding.

In this embodiment, the first sliding member 151 and the second sliding member 152 may be detachably connected, and the first sliding member 151 and the second sliding member 152 may be independently maintained and replaced, to reduce maintaining costs.

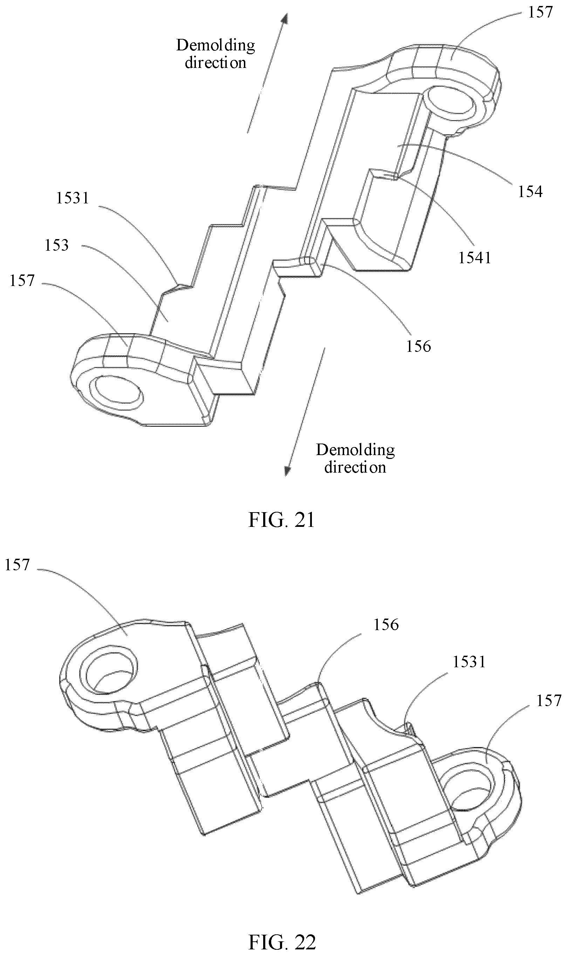

In addition, in this embodiment, the first sliding member 151 and the second sliding member 152 have simple structures, and may be manufactured through injection molding. Based on that the first inclined surface 1531 and the second inclined surface 1541 of the first sliding member 151 are oppositely arranged, demolding may be performed from an orientation of the first inclined surface 1531 and an orientation of the second inclined surface 1541. As shown in FIG. 16 and FIG. 21, through injection molding, the first sliding member 151 and the second sliding member 152 are easily manufactured, and batch manufacturing costs are low.

Optionally, a first matching portion 155 is provided between the first abutting portion 153 and the second abutting portion 154 of the first sliding member 151, a groove 1551 is provided on the first matching portion 155, a second matching portion 156 is provided between the first abutting portion 153 and the second abutting portion 154 of the second sliding member 152, and the second matching portion 156 at least partially clamps with the groove 1551. The second matching portion 156 of the second sliding member 152 clamps with the groove 1551 of the first matching portion 155, so that the first sliding member 151 and the second sliding member 152 are matched and fixed, to improve stability of the first sliding member 151 and the second sliding member 152.

In another possible implementation, a difference between structures of the first swing member 13 and the second swing member 14 and those in the foregoing implementation lies in that, in this implementation, the two first curved surfaces 133 are oppositely arranged on the first swing member 13, the first curved surfaces 133 enclose a sliding slot, the first abutting portions 153 are in the sliding slot, and respectively abut against the two opposite first curved surfaces 133; and the two second curved surfaces 143 are oppositely arranged on the second swing member 14, the second curved surfaces 143 enclose another sliding slot, the second abutting portions 154 are in the another sliding slot, and respectively abut against the two second curved surfaces 143 opposite to each other.

In this implementation, the sliding slots are provided on the first swing member 13 and the second swing member 14, to form the first curved surface 133 and the second curved surface 143, and the first abutting portion 153 and the second abutting portion 154 of the sliding assembly 15 are respectively arranged at the two ends of the sliding assembly 15. In comparison with the foregoing implementation, the structure in this implementation is simple. In comparison with the processing of teeth of the gears, the processing of providing the sliding slot on the swing member is simpler, and processing costs can be reduced.

Optionally, in the foregoing implementation, the first curved surface 133 and the second curved surface 143 are both spiral surfaces, and spiral directions of the first curved surface 133 and the second curved surface 143 are different. It should be noted that, when the synchronization mechanism 1 is used, the first swing member 13 and the second swing member 14 are mirrored based on a center line between the first rotation axis 11 and the second rotation axis 12, and the center line is parallel to axis lines of the first rotation axis 11 and the second rotation axis 12. Therefore, the spiral directions of the first curved surface 133 located on the first swing member 13 and the second curved surface 143 located on the second swing member 14 are opposite (mirrored). Based on that the spiral directions of the first curved surface 133 and the second curved surface 143 are different, when the sliding assembly 15 slides along a direction, the directions along which the sliding assembly 15 drives the first swing member 13 and the second swing member 14 to rotate are opposite. In addition, in this embodiment, when the first swing member 13 and the second swing member 14 are enabled, in a manner of mirroring the curved surfaces and in combination with sliding of the sliding assembly 15, to synchronously and reversely rotate, the first swing member 13 and the second swing member 14 may be manufactured by using a same model, and only need to be mounted in a mirroring manner during assembly, so that molds are reduced, and manufacturing costs are further reduced.

Optionally, in the foregoing implementation, the sliding assembly 15 further includes at least two axis sleeves 157, and the axis sleeves 157 are respectively sleeved on the first rotation axis 11 and the second rotation axis 12. The sliding assembly 15 is separately sleeved on the first rotation axis 11 and the second rotation axis 12 by using the axis sleeves 157, so that the sliding assembly 15 can move along an axial direction of the first rotation axis 11 and the second rotation axis 12, to improve movement stability of the sliding assembly 15.

According to a second aspect, an embodiment of this application further provides an electronic device. FIG. 26 is a partial exploded view of a folding apparatus in an electronic device. The electronic device includes a first middle frame 2, a second middle frame 3, a flexible screen, and the synchronization mechanism 1 provided in the embodiments of this application. The first middle frame 2 is connected to the first swing member 13 in the synchronization mechanism 1, the second middle frame 3 is separately connected to the second swing member 14 in the synchronization mechanism 1, and the flexible screen covers the first middle frame 2 and the second middle frame 3.

Optionally, the electronic device provided in this embodiment of this application may be a folded cellphone, a folded tablet computer, or a folded notebook computer, but this is not limited thereto.

In the electronic device provided in this application, the synchronization mechanism 1 provided in the embodiments of this application is used in the electronic device, so that a thickness of a rotation axis of the electronic device can be reduced. Assembles of the synchronization mechanism 1 implement feasibility of batch processing by using molds, mold precision is directly improved to improve manufacturing precision, and secondary processing is not needed, so that a secondary processing error is reduced, and manufacturing costs are low. In addition, the assembles of the synchronization mechanism 1 are modularly designed, and can be independently maintained or replaced, to reduce maintaining or replacement costs.

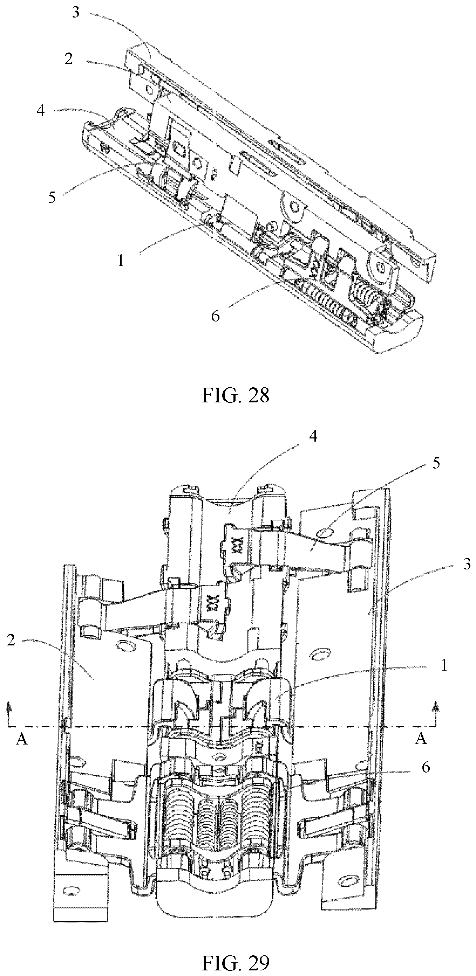

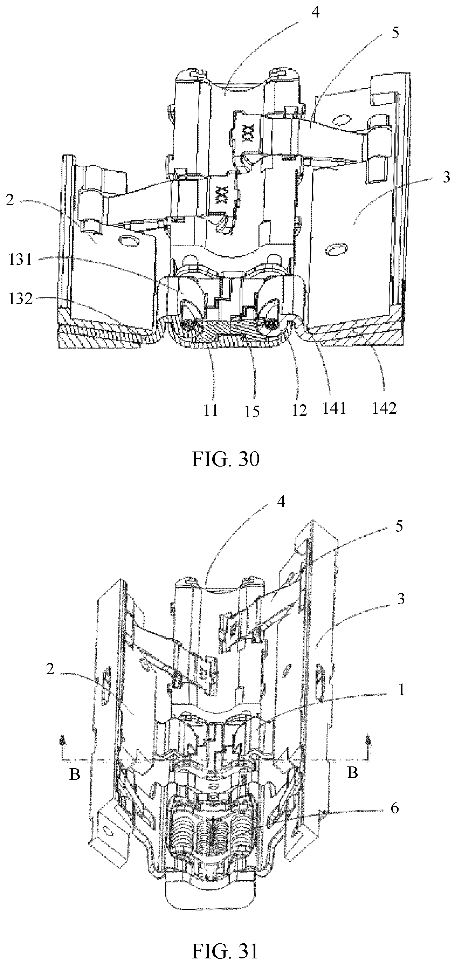

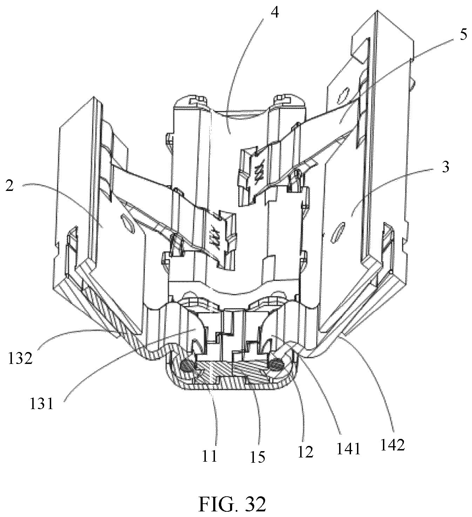

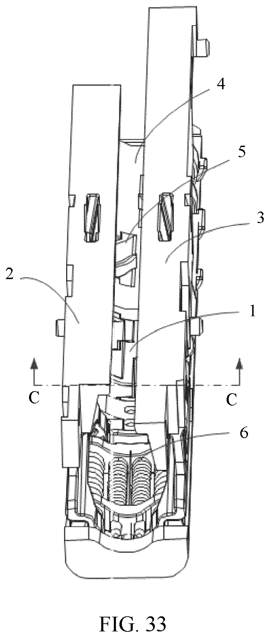

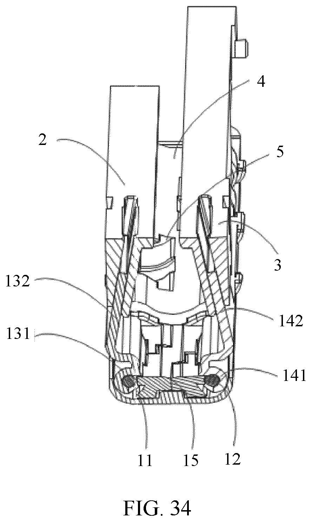

In an implementation, as shown in FIG. 26 to FIG. 34, the electronic device further includes an engine base 4, a main swing member 5, and a damping swing member 6. The synchronization mechanism 1, the main swing member 5, and the damping swing member 6 are all mounted on the engine base 4. The electronic device provides a main swing force through the main swing member 5, provides a synchronous swing force of the first middle frame 2 and the second middle frame 3 through the synchronization mechanism 1, and provides swing damping of the first middle frame 2 and the second middle frame 3 (or the flexible screen) through the damping swing member 6, to improve a touch feeling for the user when the user opens and closes the electronic device.

In another implementation, the electronic device includes a plurality of synchronization mechanisms 1, and a plurality of synchronization structures are evenly distributed on the engine base 4, so that a procedure of folding or unfolding the flexible screen is more stable.

In another implementation, the synchronization mechanism 1 is located between the main swing member 5 and the damping swing member 6. The synchronization mechanism 1 is located at a middle position, so that force-bearing points of the flexible screen are uniform, to improve stability.

In the embodiments of this application, the term "and/or" describes an association relationship for describing associated objects, and indicates that three relationships may exist. For example, A and/or B may indicate the following cases: Only A exists, both A and B exist, and only B exists. A and B may be singular or plural. The character "/" generally indicates an "or" relationship between the associated objects. "At least one of the followings" or similar expressions refer to any combination of these terms, including a single item or any combination of a plurality of items. For example, at least one of a, b, and c may represent: a, b, c, a⁻, b, a⁻, c, b⁻, c, or a⁻, b⁻, c, where a, b, and c may be a single or a plurality.

A person of ordinary skill in the art may be aware that the units and algorithm steps described in embodiments disclosed herein can be implemented by a combination of electronic hardware, computer software, and electronic hardware. Whether the functions are performed by hardware or software depends on particular applications and design constraint conditions of the technical solutions. A person skilled in the art may use different methods to implement the described functions for each particular application, but such implementation is not to be considered outside of the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

The foregoing descriptions are merely specific implementations of this application. The protection scope of this application shall be subject to the protection scope of the claims.

## Claims

1. A synchronization mechanism, wherein the synchronization mechanism (1) comprises a first rotation axis (11), a second rotation axis (12), a first swing member (13), a second swing member (14), and a sliding assembly (15);
the first swing member (13) is rotatably connected to the first rotation axis (11), the second swing member (14) is rotatably connected to the second rotation axis (12), and the first rotation axis (11) is arranged in parallel with the second rotation axis (12); and
the sliding assembly (15) connects the first swing member (13) and the second swing member (14), the first swing member (13) rotates around the first rotation axis (11) to drive the sliding assembly (15) to move along an axial direction of the first rotation axis (11) and the second rotation axis (12), and the sliding assembly (15) drives the second swing member (14) to rotate around the second rotation axis (12), to enable a rotation direction of the second swing member (14) to be opposite to a rotation direction of the first swing member (13), wherein the first swing member (13) comprises two first curved surfaces (133) arranged along the rotation direction, the second swing member (14) comprises two second curved surfaces (143) arranged along the rotation direction, and the first curved surface (133) and the second curved surface (143) are arranged in a mirroring manner; and
the sliding assembly (15) comprises a first abutting portion (153) and a second abutting portion (154), the first abutting portion (153) is configured to abut against the first curved surface (133), and the second abutting portion (154) is configured to abut against the second curved surface (143), to enable the first abutting portion (153) to move, when the first swing member (13) rotates, along the axial direction of the first rotation axis (11) under an action of the first curved surface (133), and the second abutting portion (154) acts on the second curved surface (143), to drive the second swing member (14) to rotate around the second rotation axis (12), wherein
the sliding assembly (15) comprises a first sliding member (151) and a second sliding member (152), both the first sliding member (151) and the second sliding member (152) are provided with the first abutting portion (153) and the second abutting portion (154), **characterized in that** the first sliding member (151) and the second sliding member (152) are intersected, the first abutting portion (153) of the first sliding member (151) and the second abutting portion (154) of the second sliding member (152) are oppositely arranged, and the first abutting portion (153) of the second sliding member (152) and the second abutting portion (154) of the first sliding member (151) are oppositely arranged.

2. The synchronization mechanism according to claim 1, wherein the first swing member (13) comprises a first rotation portion (131) and a first swing arm (132), the first rotation portion (131) is rotatably connected to the first rotation axis (11), the first swing arm (132) is connected to the first rotation portion (131), and the first curved surface (133) is arranged along a peripheral direction of the first rotation portion (131); and
the second swing member (14) comprises a second rotation portion (141) and a second swing arm (142), the second rotation portion (141) is rotatably connected to the second rotation axis (12), the second swing arm (142) is connected to the second rotation portion (141), and the second curved surface (143) is arranged along a peripheral direction of the second rotation portion (141).

3. The synchronization mechanism according to claim 2, wherein the two first curved surfaces (133) are arranged at two ends of an axial direction of the first rotation portion (131), and the two second curved surfaces (143) are arranged at two ends of an axial direction of the second rotation portion (141).

4. The synchronization mechanism according to claim 5, wherein the first sliding member (151) and the second sliding member (152) are detachably connected.

5. The synchronization mechanism according to claim 4, wherein a first matching portion (155) is provided between the first abutting portion (153) and the second abutting portion (154) of the first sliding member (151), a groove (1551) is provided on the first matching portion (155), a second matching portion (156) is provided between the first abutting portion (153) and the second abutting portion (154) of the second sliding member (152), and the second matching portion (156) at least partially clamps with the groove (1551).

6. The synchronization mechanism according to claim 4, wherein the first sliding member (151) and the second sliding member (152) are formed through injection molding.

7. The synchronization mechanism according to claim 3, wherein the first rotation portion (131) comprises a first rotation wall (1311) and a second rotation wall (1312), the first rotation wall (1311) and the second rotation wall (1312) enclose a first axis hole, the first rotation axis (11) passes through the first axis hole, the first swing arm (132) is connected to a side that is of the first rotation wall (1311) and that is away from the second rotation wall (1312), and the two first curved surfaces (133) are arranged on two end surfaces of the second rotation wall (1312) along an axial direction of the first axis hole; and
the second rotation portion (141) comprises a third rotation wall (1411) and a fourth rotation wall (1412), the third rotation wall (1411) and the fourth rotation wall (1412) enclose a second axis hole, the second rotation axis (12) passes through the second axis hole, the second swing arm (142) is connected to a side that is of the third rotation wall (1411) and that is away from the fourth rotation wall (1412), and the two second curved surfaces (143) are arranged on two end surfaces of the fourth rotation wall (1412) along an axial direction of the second axis hole.

8. The synchronization mechanism according to any one of claims 1 to 6, wherein the first curved surface (133) and the second curved surface (143) are both spiral surfaces, and spiral directions of the first curved surface (133) and the second curved surface (143) are different.

9. The synchronization mechanism according to claim 1, wherein the first swing member (13) and the second swing member (14) are formed through injection molding.

10. The synchronization mechanism according to claim 1, wherein the sliding assembly (15) further comprises at least two axis sleeves (157), and the axis sleeves (157) are respectively sleeved on the first rotation axis (11) and the second rotation axis (12).

11. The synchronization mechanism according to claim 1, wherein a side that is of the first abutting portion (153) and that faces the first curved surface (133) is provided with a first inclined surface (1531), and the first inclined surface (1531) matches the first curved surface (133); and a side that is of the second abutting portion (154) and that faces the second curved surface (143) is provided with a second inclined surface (1541), and the second inclined surface (1541) matches the second curved surface (143).

12. An electronic device, wherein the electronic device comprises: a first middle frame (2), a second middle frame (3), a flexible screen, and the synchronization mechanism (1) according to any one of claims 1 to 11;
the first middle frame (2) is connected to a first swing member (13) in the synchronization mechanism (1), and the second middle frame (3) is connected to a second swing member (14) in the synchronization mechanism (1); and
the flexible screen covers the first middle frame (2) and the second middle frame (3).

13. The electronic device according to claim 12, wherein the electronic device further comprises an engine base (4), a main swing member (5), and a damping swing member (6), and the synchronization mechanism (1), the main swing member (5), and the damping swing member (6) are all mounted on the engine base (4).

## Patentansprüche

1. Ein Synchronisationsmechanismus, wobei der Synchronisationsmechanismus (1) eine erste Drehachse (11), eine zweite Drehachse (12), ein erstes Schwenkelement (13), ein zweites Schwenkelement (14) und eine Gleitanordnung (15) umfasst;
wobei das erste Schwenkelement (13) drehbar mit der ersten Drehachse (11) verbunden ist, das zweite Schwenkelement (14) drehbar mit der zweiten Drehachse (12) verbunden ist und die erste Drehachse (11) parallel zu der zweiten Drehachse (12) angeordnet ist; und
wobei die Gleitanordnung (15) das erste Schwenkelement (13) und das zweite Schwenkelement (14) verbindet, wobei das erste Schwenkelement (13) um die erste Drehachse (11) rotiert, um die Gleitanordnung (15) dazu anzutreiben, sich entlang einer axialen Richtung der ersten Drehachse (11) und der zweiten Drehachse (12) zu bewegen, und wobei die Gleitanordnung (15) das zweite Schwenkelement (14) dazu antreibt, um die zweite Drehachse (12) zu rotieren, um zu ermöglichen, dass eine Drehrichtung des zweiten Schwenkelements (14) entgegengesetzt zu einer Drehrichtung des ersten Schwenkelements (13) ist, wobei das erste Schwenkelement (13) zwei erste gekrümmte Oberflächen (133) umfasst, die entlang der Drehrichtung angeordnet sind, das zweite Schwenkelement (14) zwei zweite gekrümmte Oberflächen (143) umfasst, die entlang der Drehrichtung angeordnet sind, und die erste gekrümmte Oberfläche (133) sowie die zweite gekrümmte Oberfläche (143) spiegelbildlich zueinander angeordnet sind; und
wobei die Gleitanordnung (15) einen ersten Anlageabschnitt (153) und einen zweiten Anlageabschnitt (154) umfasst, wobei der erste Anlageabschnitt (153) dazu konfiguriert ist, an der ersten gekrümmten Oberfläche (133) anzuliegen, und der zweite Anlageabschnitt (154) dazu konfiguriert ist, an der zweiten gekrümmten Oberfläche (143) anzuliegen, um zu ermöglichen, dass sich der erste Anlageabschnitt (153) bei Rotation des ersten Schwenkelements (13) unter einer Einwirkung der ersten gekrümmten Oberfläche (133) entlang der axialen Richtung der ersten Drehachse (11) bewegt, und wobei der zweite Anlageabschnitt (154) auf die zweite gekrümmte Oberfläche (143) einwirkt, um das zweite Schwenkelement (14) zur Rotation um die zweite Drehachse (12) anzutreiben, wobei
die Gleitanordnung (15) ein erstes Gleitelement (151) und ein zweites Gleitelement (152) umfasst, wobei sowohl das erste Gleitelement (151) als auch das zweite Gleitelement (152) mit dem ersten Anlageabschnitt (153) und dem zweiten Anlageabschnitt (154) versehen sind, **dadurch gekennzeichnet, dass** das erste Gleitelement (151) und das zweite Gleitelement (152) einander schneiden, wobei der erste Anlageabschnitt (153) des ersten Gleitelements (151) und der zweite Anlageabschnitt (154) des zweiten Gleitelements (152) einander gegenüberliegend angeordnet sind, und der erste Anlageabschnitt (153) des zweiten Gleitelements (152) und der zweite Anlageabschnitt (154) des ersten Gleitelements (151) einander gegenüberliegend angeordnet sind.

2. Synchronisationsmechanismus nach Anspruch 1, wobei das erste Schwenkelement (13) einen ersten Rotationsabschnitt (131) und einen ersten Schwenkarm (132) umfasst, wobei der erste Rotationsabschnitt (131) drehbar mit der ersten Rotationsachse (11) verbunden ist, der erste Schwenkarm (132) mit dem ersten Rotationsabschnitt (131) verbunden ist und die erste gekrümmte Fläche (133) entlang einer Umfangsrichtung des ersten Rotationsabschnitts (131) angeordnet ist; und
das zweite Schwenkelement (14) einen zweiten Rotationsabschnitt (141) und einen zweiten Schwenkarm (142) umfasst, wobei der zweite Rotationsabschnitt (141) drehbar mit der zweiten Rotationsachse (12) verbunden ist, der zweite Schwenkarm (142) mit dem zweiten Rotationsabschnitt (141) verbunden ist und die zweite gekrümmte Fläche (143) entlang einer Umfangsrichtung des zweiten Rotationsabschnitts (141) angeordnet ist.

3. Synchronisationsmechanismus nach Anspruch 2, wobei die zwei ersten gekrümmten Flächen (133) an zwei Enden einer axialen Richtung des ersten Rotationsabschnitts (131) angeordnet sind und die zwei zweiten gekrümmten Flächen (143) an zwei Enden einer axialen Richtung des zweiten Rotationsabschnitts (141) angeordnet sind.

4. Synchronisationsmechanismus nach Anspruch 5, wobei das erste Gleitelement (151) und das zweite Gleitelement (152) lösbar miteinander verbunden sind.

5. Synchronisationsmechanismus nach Anspruch 4, wobei ein erster Anpassungsabschnitt (155) zwischen dem ersten Anlageabschnitt (153) und dem zweiten Anlageabschnitt (154) des ersten Gleitelements (151) vorgesehen ist, eine Nut (1551) an dem ersten Anpassungsabschnitt (155) vorgesehen ist, ein zweiter Anpassungsabschnitt (156) zwischen dem ersten Anlageabschnitt (153) und dem zweiten Anlageabschnitt (154) des zweiten Gleitelements (152) vorgesehen ist und der zweite Anpassungsabschnitt (156) zumindest teilweise mit der Nut (1551) in Eingriff steht.

6. Synchronisationsmechanismus nach Anspruch 4, wobei das erste Gleitelement (151) und das zweite Gleitelement (152) durch Spritzgießen geformt sind.

7. Synchronisationsmechanismus nach Anspruch 3, wobei der erste Rotationsabschnitt (131) eine erste Rotationswand (1311) und eine zweite Rotationswand (1312) umfasst, wobei die erste Rotationswand (1311) und die zweite Rotationswand (1312) ein erstes Achsenloch umschließen, die erste Rotationsachse (11) durch das erste Achsenloch verläuft, der erste Schwenkarm (132) mit einer Seite der ersten Rotationswand (1311) verbunden ist, die von der zweiten Rotationswand (1312) abgewandt ist, und die zwei ersten gekrümmten Flächen (133) an zwei Stirnflächen der zweiten Rotationswand (1312) entlang einer axialen Richtung des ersten Achsenlochs angeordnet sind; und
Der zweite Rotationsabschnitt (141) umfasst eine dritte Rotationswand (1411) und eine vierte Rotationswand (1412), wobei die dritte Rotationswand (1411) und die vierte Rotationswand (1412) eine zweite Achsenbohrung umschließen, die zweite Rotationsachse (12) durch die zweite Achsenbohrung verläuft, der zweite Schwenkarm (142) mit einer Seite der dritten Rotationswand (1411) verbunden ist, die von der vierten Rotationswand (1412) abgewandt ist, und die zwei zweiten gekrümmten Oberflächen (143) an zwei Endflächen der vierten Rotationswand (1412) entlang einer axialen Richtung der zweiten Achsenbohrung angeordnet sind.

8. Synchronisationsmechanismus nach einem der Ansprüche 1 bis 6, wobei die erste gekrümmte Oberfläche (133) und die zweite gekrümmte Oberfläche (143) beide spiralförmige Oberflächen sind und die Spiralrichtungen der ersten gekrümmten Oberfläche (133) und der zweiten gekrümmten Oberfläche (143) unterschiedlich sind.

9. Synchronisationsmechanismus nach Anspruch 1, wobei das erste Schwenkelement (13) und das zweite Schwenkelement (14) durch Spritzgießen geformt sind.

10. Synchronisationsmechanismus nach Anspruch 1, wobei die Gleitanordnung (15) ferner mindestens zwei Achsenhülsen (157) umfasst und die Achsenhülsen (157) jeweils auf die erste Rotationsachse (11) und die zweite Rotationsachse (12) aufgeschoben sind.

11. Synchronisationsmechanismus nach Anspruch 1, wobei eine Seite des ersten Anlageabschnitts (153), die der ersten gekrümmten Oberfläche (133) zugewandt ist, mit einer ersten geneigten Oberfläche (1531) versehen ist und die erste geneigte Oberfläche (1531) mit der ersten gekrümmten Oberfläche (133) zusammenpasst; und eine Seite des zweiten Anlageabschnitts (154), die der zweiten gekrümmten Oberfläche (143) zugewandt ist, mit einer zweiten geneigten Oberfläche (1541) versehen ist und die zweite geneigte Oberfläche (1541) mit der zweiten gekrümmten Oberfläche (143) zusammenpasst.

12. Elektronisches Gerät, wobei das elektronische Gerät umfasst: einen ersten Mittelrahmen (2), einen zweiten Mittelrahmen (3), einen flexiblen Bildschirm und den Synchronisationsmechanismus (1) nach einem der Ansprüche 1 bis 11;
der erste Mittelrahmen (2) ist mit einem ersten Schwenkelement (13) in dem Synchronisationsmechanismus (1) verbunden, und der zweite Mittelrahmen (3) ist mit einem zweiten Schwenkelement (14) in dem Synchronisationsmechanismus (1) verbunden; und
der flexible Bildschirm bedeckt den ersten Mittelrahmen (2) und den zweiten Mittelrahmen (3).

13. Elektronisches Gerät nach Anspruch 12, wobei das elektronische Gerät ferner eine Motorbasis (4), ein Hauptschwenkelement (5) und ein Dämpfungsschwenkelement (6) umfasst, und der Synchronisationsmechanismus (1), das Hauptschwenkelement (5) und das Dämpfungsschwenkelement (6) alle an der Motorbasis (4) montiert sind.

## Revendications

1. Un mécanisme de synchronisation, dans lequel le mécanisme de synchronisation (1) comprend un premier axe de rotation (11), un second axe de rotation (12), un premier élément oscillant (13), un second élément oscillant (14) et un ensemble coulissant (15) ;
le premier élément oscillant (13) est relié de manière rotative au premier axe de rotation (11), le second élément oscillant (14) est relié de manière rotative au second axe de rotation (12), et le premier axe de rotation (11) est disposé parallèlement au second axe de rotation (12) ; et
l'ensemble coulissant (15) relie le premier élément oscillant (13) et le second élément oscillant (14), le premier élément oscillant (13) tourne autour du premier axe de rotation (11) pour entraîner l'ensemble coulissant (15) à se déplacer le long d'une direction axiale du premier axe de rotation (11) et du second axe de rotation (12), et l'ensemble coulissant (15) entraîne le second élément oscillant (14) à tourner autour du second axe de rotation (12), pour permettre à une direction de rotation du second élément oscillant (14) d'être opposée à une direction de rotation du premier élément oscillant (13), dans lequel le premier élément oscillant (13) comprend deux premières surfaces courbes (133) disposées le long de la direction de rotation, le second élément oscillant (14) comprend deux secondes surfaces courbes (143) disposées le long de la direction de rotation, et la première surface courbe (133) et la seconde surface courbe (143) sont disposées de manière miroir ; et
l'ensemble coulissant (15) comprend une première partie de butée (153) et une seconde partie de butée (154), la première partie de butée (153) est configurée pour venir en butée contre la première surface courbe (133), et la seconde partie de butée (154) est configurée pour venir en butée contre la seconde surface courbe (143), pour permettre à la première partie de butée (153) de se déplacer, lorsque le premier élément oscillant (13) tourne, le long de la direction axiale du premier axe de rotation (11) sous l'action de la première surface courbe (133), et la seconde partie de butée (154) agit sur la seconde surface courbe (143), pour entraîner le second élément oscillant (14) à tourner autour du second axe de rotation (12), dans lequel
l'ensemble coulissant (15) comprend un premier élément coulissant (151) et un second élément coulissant (152), le premier élément coulissant (151) ainsi que le second élément coulissant (152) sont tous deux pourvus de la première partie de butée (153) et de la seconde partie de butée (154), **caractérisé en ce que** le premier élément coulissant (151) et le second élément coulissant (152) sont intersectés, la première partie de butée (153) du premier élément coulissant (151) et la seconde partie de butée (154) du second élément coulissant (152) sont disposées de manière opposée, et la première partie de butée (153) du second élément coulissant (152) et la seconde partie de butée (154) du premier élément coulissant (151) sont disposées de manière opposée.

2. Le mécanisme de synchronisation selon la revendication 1, dans lequel le premier élément oscillant (13) comprend une première partie de rotation (131) et un premier bras oscillant (132), la première partie de rotation (131) est reliée de manière rotative au premier axe de rotation (11), le premier bras oscillant (132) est relié à la première partie de rotation (131), et la première surface courbe (133) est disposée le long d'une direction périphérique de la première partie de rotation (131) ; et
le second élément oscillant (14) comprend une seconde partie de rotation (141) et un second bras oscillant (142), la seconde partie de rotation (141) est reliée de manière rotative au second axe de rotation (12), le second bras oscillant (142) est relié à la seconde partie de rotation (141), et la seconde surface courbe (143) est disposée le long d'une direction périphérique de la seconde partie de rotation (141).

3. Le mécanisme de synchronisation selon la revendication 2, dans lequel les deux premières surfaces courbes (133) sont disposées aux deux extrémités d'une direction axiale de la première partie de rotation (131), et les deux secondes surfaces courbes (143) sont disposées aux deux extrémités d'une direction axiale de la seconde partie de rotation (141).

4. Le mécanisme de synchronisation selon la revendication 5, dans lequel le premier élément coulissant (151) et le second élément coulissant (152) sont reliés de manière amovible.

5. Le mécanisme de synchronisation selon la revendication 4, dans lequel une première partie de correspondance (155) est prévue entre la première partie de butée (153) et la seconde partie de butée (154) du premier élément coulissant (151), une rainure (1551) est prévue sur la première partie de correspondance (155), une seconde partie de correspondance (156) est prévue entre la première partie de butée (153) et la seconde partie de butée (154) du second élément coulissant (152), et la seconde partie de correspondance (156) se bloque au moins partiellement avec la rainure (1551).

6. Le mécanisme de synchronisation selon la revendication 4, dans lequel le premier élément coulissant (151) et le second élément coulissant (152) sont formés par moulage par injection.

7. Le mécanisme de synchronisation selon la revendication 3, dans lequel la première partie de rotation (131) comprend une première paroi de rotation (1311) et une seconde paroi de rotation (1312), la première paroi de rotation (1311) et la seconde paroi de rotation (1312) enferment un premier trou d'axe, le premier axe de rotation (11) traverse le premier trou d'axe, le premier bras oscillant (132) est relié à un côté qui est de la première paroi de rotation (1311) et qui est éloigné de la seconde paroi de rotation (1312), et les deux premières surfaces courbes (133) sont disposées sur deux surfaces d'extrémité de la seconde paroi de rotation (1312) le long d'une direction axiale du premier trou d'axe ; et
la deuxième partie de rotation (141) comprend une troisième paroi de rotation (1411) et une quatrième paroi de rotation (1412), la troisième paroi de rotation (1411) et la quatrième paroi de rotation (1412) délimitent un deuxième trou d'axe, le deuxième axe de rotation (12) traverse le deuxième trou d'axe, le deuxième bras oscillant (142) est relié à un côté qui est celui de la troisième paroi de rotation (1411) et qui est éloigné de la quatrième paroi de rotation (1412), et les deux deuxièmes surfaces courbes (143) sont disposées sur deux surfaces d'extrémité de la quatrième paroi de rotation (1412) le long d'une direction axiale du deuxième trou d'axe.

8. Mécanisme de synchronisation selon l'une quelconque des revendications 1 à 6, dans lequel la première surface courbe (133) et la deuxième surface courbe (143) sont toutes deux des surfaces en spirale, et les directions de spirale de la première surface courbe (133) et de la deuxième surface courbe (143) sont différentes.

9. Mécanisme de synchronisation selon la revendication 1, dans lequel le premier élément oscillant (13) et le deuxième élément oscillant (14) sont formés par moulage par injection.

10. Mécanisme de synchronisation selon la revendication 1, dans lequel l'ensemble coulissant (15) comprend en outre au moins deux manchons d'axe (157), et les manchons d'axe (157) sont respectivement emmanchés sur le premier axe de rotation (11) et le deuxième axe de rotation (12).

11. Mécanisme de synchronisation selon la revendication 1, dans lequel un côté qui est celui de la première partie de butée (153) et qui fait face à la première surface courbe (133) est pourvu d'une première surface inclinée (1531), et la première surface inclinée (1531) correspond à la première surface courbe (133) ; et un côté qui est celui de la deuxième partie de butée (154) et qui fait face à la deuxième surface courbe (143) est pourvu d'une deuxième surface inclinée (1541), et la deuxième surface inclinée (1541) correspond à la deuxième surface courbe (143).

12. Dispositif électronique, dans lequel le dispositif électronique comprend : un premier cadre intermédiaire (2), un deuxième cadre intermédiaire (3), un écran flexible, et le mécanisme de synchronisation (1) selon l'une quelconque des revendications 1 à 11 ;
le premier cadre intermédiaire (2) est relié à un premier élément oscillant (13) dans le mécanisme de synchronisation (1), et le deuxième cadre intermédiaire (3) est relié à un deuxième élément oscillant (14) dans le mécanisme de synchronisation (1) ; et
l'écran flexible recouvre le premier cadre intermédiaire (2) et le deuxième cadre intermédiaire (3).

13. Dispositif électronique selon la revendication 12, dans lequel le dispositif électronique comprend en outre une base de moteur (4), un élément oscillant principal (5), et un élément oscillant d'amortissement (6), et le mécanisme de synchronisation (1), l'élément oscillant principal (5), et l'élément oscillant d'amortissement (6) sont tous montés sur la base de moteur (4).
